(19)

**Europäisches Patentamt**
**European Patent Office**
**Office européen des brevets**

(11)  **EP 3 759 425 B1**

(12)  **EUROPEAN PATENT SPECIFICATION**

(45) Date of publication and mention
of the grant of the patent:
**10.05.2023  Bulletin 2023/19**

(21) Application number: **19706676.4**

(22) Date of filing: **26.02.2019**

(51) International Patent Classification (IPC):
*G01B 11/06* (2006.01)    *B21C 37/04* (2006.01)
*G01N 21/64* (2006.01)    *B21C 51/00* (2006.01)

(52) Cooperative Patent Classification (CPC):
**G01B 11/0658; B21C 37/042; B21C 51/00;
G01N 21/64**

(86) International application number:
**PCT/EP2019/054736**

(87) International publication number:
**WO 2019/166436 (06.09.2019 Gazette 2019/36)**

(54) **APPARATUS FOR DETECTING COATING ON WIRE AND A METHOD TO USE SUCH APPARATUS**

VORRICHTUNG ZUR DETEKTION VON BESCHICHTUNGEN AUF DRAHT UND VERFAHREN ZUR
VERWENDUNG SOLCH EINER VORRICHTUNG

APPAREIL POUR DÉTECTER DES REVÊTEMENTS SUR FIL ET PROCÉDÉ POUR UTILISER UN
TEL APPAREIL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **28.02.2018  EP 18159191**

(43) Date of publication of application:
**06.01.2021  Bulletin 2021/01**

(73) Proprietor: **Bekaert Advanced Cords Aalter NV
9880 Aalter (BE)**

(72) Inventors:
• **VANLANDEGHEM, Bart
9770 Kruisem (BE)**

• **VANREYTEN, Wouter
33720 Tampere (FI)**
• **MORTIER, Kurt
9910 Ursel (BE)**
• **BAEKELANDT, Tom
9052 Zwijnaarde (BE)**

(74) Representative: **Seynhaeve, Geert Filiep
NV Bekaert SA
IPD - PC6030
Bekaertstraat 2
8550 Zwevegem (BE)**

(56) References cited:
**EP-B1- 0 409 932    GB-A- 1 390 278
US-A- 5 469 252    US-B1- 6 597 455
US-B1- 9 626 540**

## Description

### Technical Field

The invention relates to a measuring cell to detect coatings on wires more in particularly on round wires such as filaments, bundles or cords made from metals like steel or copper on which an optically active coating is present. The invention likewise relates to a method to use such apparatus and to an apparatus for coating a wire including the measuring cell.

### Background Art

Apparatus to detect to the presence of a coating are well known in the industry dealing with foils and webs. For example in the paper industry it is quite common to make an online gloss measurement to determine the presence of a coating wherein a fluorescent is added (US4250382). Such measurement is performed by means of an apparatus emitting UV radiation and determining the amount of fluorescence generated (US 6603126).

The measurement of such fluorescent radiation - and hence the presence and amount of coating - on a foil or web is straightforward as the fluorescent radiation only leaves the foil or web in the half space at the side wherein the excitation beam impinges. Also a foil or web allows to excite a large area as the foil is wide. The total collectable fluorescence radiation is proportional to the surface illuminated.

Detection of fluorescence on a curved surface such as that of a round wire is more difficult as not only the fluorescent radiation leaves the surface in all directions but the surface itself is also bent in one direction thereby spreading the radiation in all directions. As a wire is generally thin (less than one millimetre wide) there is also not much fluorescent radiation to be collected unless one measures over a very long length.

Although US6597455 describes a measuring apparatus for detecting flaws on an enamel coated wire by changes in the reflectivity of the wire, the apparatus does not allow the measurement of the much weaker fluorescent radiation. Further the apparatus does not give an indication of the circumferential distribution of the coating.

US 5469252 describes an apparatus for detecting flaws in an optical fibre. It is based on changes in reflection direction of light impinging perpendicular to the axis of the fibre. In case a flaw is present, the apparatus detects light that is deflected outside of the plane perpendicular to the fibre. A similar device is described in EP 0409932 B1.

There are therefore no measuring apparatus available to reliably measure fluorescent radiation excited from a wire that has a coating containing a fluorescent. The inventors therefore set themselves the task to design one.

## Disclosure of Invention

It is a first object of the invention to provide a measuring cell to verify the presence of a thin coating on a wire. It is a further object of the invention to provide for a method to operate such measuring cell. It is a still further goal of the invention to provide an apparatus to control the amount of coating applied to a wire.

According a first aspect of the invention a measuring cell with the features of claim 1 is claimed. The measuring cell is for optically verifying the presence of a coating on a wire comprising:

- A cavity having an entrance orifice and exit orifice for guiding said wire through said cavity, the entrance orifice and exit orifice defining a reference axis;
- Two or more sources for emitting light;
- Two or more detectors for detecting light

whereby the sources emit light towards a central point on the reference axis. The measuring cell is characterized in that the sources and/or detectors are situated on the surface of a first and second cone that both have the reference axis as axis and where the top of the first and second cone meet at the central point. All the sources and detectors are oriented towards this central point. By preference the sources and detectors are circumferentially evenly distributed around the reference axis.

The measuring cell is used to detect the presence of a coating on wire. The measuring cell is based on optical principles by which is meant that it uses electromagnetic waves in the infrared, visible or ultra-violet spectrum - for convenience called 'light' in the remainder of this application - that interact with the coating. The measuring cell does not detect the physical thickness of the coating for example by measuring the diameter of the wire with and without coating. The coating may be very thin for example thinner than ten micrometer, or even thinner than five micrometer for example thinner than one micrometer.

The coating on the wire of which the presence is to be detected must interact with the light impinging on the coating. With this is meant that the coating should not totally reflect the light but that a process of absorption and/or emission of the light radiation must take place in the coating. For example the impinging light may have a certain bandwidth of which certain frequencies are absorbed by the coating and others not. The emitted light will then show absorption lines that can be detected by the detectors. Alternatively the coating may emit lower energy light after having been excited with a higher energy light, a process known as fluorescence.

As the light to be detected is reflected on (possibly with some absorption) and/or emitted by the coating on a substantially cylindrical surface, the light is spread in all possible directions. Hence the amount of light falling into a single detector is very small. The cavity is therefore designed to exclude all stray light that may disturb the measurement of the coating and the material that it is made of is not light transparent. In order to limit light entering the cavity the entrance orifice and the exit orifice are made relatively long and narrow to the wire, with an interior surface possibly coated with a light absorbing coating.

The 'first cone' and 'second cone' are to be interpreted as geometrical constructs to describe the invention. As such they do not necessarily relate to a physical object. With the "sources and/or detectors are situated on the surface of a first and second cone" is meant that the optical axis of the detector or source is on the cone. The optical axis of the detector or source goes through the central point.

Possibly all the sources are situated on the first cone while all detectors are situated on the second cone although this is not a necessity to practise the invention. It can be beneficial to mount half of the sources and half of the detectors on the first cone and the other half of the sources and detectors on the second cone, provided the number of sources and the number of detectors is even.

By preference the sources have the same light intensity when 'on'. Also it is highly preferred that all sources are situated at the same distance - the 'source distance' - from the central point. This in order to prevent that different light source distances would result in a different illumination at the central point. Likewise the detectors are preferably mounted at the same distance - the 'detector distance' - from the central point such that each detector collects the light under the same solid angle. The source distance can but need not be equal to the detector distance. By preference the detector distance is shorter than the source distance to capture as much light as possible.

A wire must for the purpose of this application be broadly interpreted: anything that is long and slender qualifies as wire. By preference the minimum and maximum calliper diameters of a cross section of the wire do not differ too much. By this is not meant that the wire must necessarily be round: wires or cords with a non-round cross section can equally well be used in the invention. Although the invention has been devised with wires having a maximum calliper diameter of about one millimetre in mind, the principles can be extended to larger diameters up to a maximum of five millimetres. As the light emitted strongly decreases with the diameter, the use of the measuring cell is limited below to wires with a diameter of 50 micrometer.

The material the wire is made of is immaterial to the invention. Although the invention has been specifically designed for use on metal wires, such as steel wires or steel cords, the inventors assert that the measuring cell can equally well be used for organic fibres that may be manmade or have a natural origin.

This arrangement of sources and detectors allows probing the presence of a coating on the wire in all circumferential directions of the wire at one single point, the central point. As the wire moves through the measuring cell the amount of coating present at each point along the length of the wire can be probed.

According a first refined embodiment of the invention, the top angles of the first and second cone are equal to one another. As the surface of a wire can be regarded as a cylinder a light beam impinging on this cylinder making an angle $\alpha$ to the reference axis will be reflected in all directions laying on a cone having a top angle of $2\alpha$ with the top of the cone corresponding to the point of impingement. Light is only reflected in the directions of the half space at the side of the source. This makes the optical measurements on wire particularly cumbersome as the reflection of a beam is scattered over a half cone, which makes the detection of all scattered light difficult. However, by mounting for example a series of detectors on the reflected half cone, the reflected light can be integrated.

In the invention, the first and second cones are degenerate cones. With a 'degenerate cone' is meant a cone having a half top angle of 90° i.e. forming a plane perpendicular to the reference axis. For the purpose of this application a 'degenerate cone' is still to be regarded as a cone be it a cone with a top angle of 180°, All sources and detectors then lay in that plane and are oriented towards the central point that is now the intersection point between the plane and the reference axis. This is a highly preferred orientation of the cones as it is very simple.

In an alternative embodiment, falling outside the ambit of the claims, the first and second cone have a different top angle. As some coating measurements are based on emission of absorbed light e.g. fluorescence, these processes are random processes. By this is meant that the light is emitted in random directions bearing no relation to the direction of the impinging light. The reflected light is diffuse. In those cases there is no need that the cones have equal top angles as the reflection is diffuse, not specular. When the reflection is diffuse it is beneficial to have a source under an angle to the reference axis while the detector is mounted in a plane perpendicular to the impinging spot i.e. one of the cones is plane perpendicular to the reference axis. As the oblique incidence creates a large surface of incidence, the fluorescence can be better detected.

In the invention the number of sources and the number of detectors is even. The sources are placed pairwise opposite to the reference axis i.e. two sources are in a source plane comprising the reference axis but are at opposite sides of the reference axis. Likewise the detectors are placed pairwise opposite to the reference axis in a detector plane. The source plane(s) or detector plane(s) comprise the reference axis i.e. all planes have the reference axis in common. With at 'opposite sides of the reference axis' two possibilities can occur

- Either it is meant that the first pair member after rotating 180° around the reference axis coincides with the second pair member or
- that the first pair member after mirroring through the central point coincides with the second pair member

The restrictions that the sources and detectors are situated on a first and second cone remain. A further restriction is that the number of sources is equal to the number of detectors.

In the above configuration for each one source plane there is a detector plane that is orthogonal to the source plane. In this case the illumination spot on the reference axis formed by one source in a source plane is seen by two detectors in the plane orthogonal the source plane. The same two detectors also detect the emanating light out of the spot formed by the opposite source in the source plane.

In an alternative embodiment, faling outside the ambit of the claims, each source plane coincides with an associated detector plane. Hence each one of the detectors can be found in the same plane of a source. The configuration has the advantage that the full spot is seen by the detector, but the arrangement does not allow to extract coating information per quadrant of the wire unless the number of sources and detectors is doubled. As a minimum one source and one detector is then needed per quadrant hence in total four sources and four detectors are needed. The configuration is particularly useful when the emission of light is specular to the impinging light for example when the coating absorbs certain wavelengths.

In a further preferred embodiment the source planes and detector planes are situated equiangular around the reference axis. By this is meant that the planes can be found at angles of 180° divided by the total number of planes (source and detector planes together). In this way the circumferential distribution can be determined with higher angular resolution for example not only in each quadrant but also per hexant.

In the invention two sources are oppositely placed in each one source plane and two detectors are oppositely placed in the corresponding detector plane that is orthogonal to said each one source plane and both the two sources and two detectors are further situated in the same plane perpendicular to the reference axis. This configuration is particularly useful in that it allows extracting coating information per quadrant of the wire. So with a minimum of two sources and two detectors the coating information per quadrant can be extracted. This is a highly preferred embodiment.

In a further refined embodiment a light transparent tube is placed between the entrance orifice and the exit orifice wherein the reference axis is comprised within the light transparent tube, more preferably the light transparent tube is co-axial with the reference axis. The light tube provides physical protection (e.g. in case of wire fracture) and prevents soiling of the detectors or sources.

In a particular preferred embodiment the source emits light that is not detected by the detector i.e. the source emits light in an excitation wavelength band, the detector detects light in a receiving wavelength band where receiving wavelength band and excitation wavelength band are disjoint. The preferred embodiment is particularly useful when the coating is fluorescent in that the fluorescent radiation band has a lower frequency then the excitation wavelength band that is usually ultraviolet radiation.

In a particularly preferred arrangement two or more measuring cells according any one of the above embodiments are placed one after the other along the path of the wire. The measuring cells are separated from one another with a length 'L'. In particular two measuring cells can be placed in series. By arranging two or more measuring cells one after the other a better measuring coverage - angularly as well as lengthwise - can be obtained. Possibly and preferably the exit orifice of the first measuring cell coincides with the entrance orifice of the second measuring cell.

According a second aspect of the invention a method to operate one, two or more measuring cells as described hitherto is disclosed, according to claim 5. The method allows to extract information of the coating on a wire for example the presence or absence of such coating.

The method starts with the provision of a wire with a coating that upon impingement with light responds with emission or absorption of light. The wire is guided through the one, two or more measurement cells from entrance orifice to exit orifice. The wire can be measured in still position enabling an accurate measurement of one spot. Preferably the wire is moved through the one, two or more measurement cells at a velocity 'v' (in meters per second) e.g. during a coating operation thereby providing information of the lengthwise distribution of the coating.

The sources and detectors of each one, two or more measurement cells are driven in a cycle with the following time intervals:

- Lighting at least one of said sources while recording the light levels detected by all detectors individually for a first time interval. The total duration of this first time interval is indicated by '$T_{on}$'. During $T_{on}$ at least one source is turned on. The first time interval is followed by..;
- Extinguishing all of said sources while recording the dark levels detected by all detectors individually for a second time interval. The duration of the second time interval is indicated as '$T_{off}$'. During $T_{off}$ all detectors are switched off;

By processing the recorded dark levels and light levels of each of the individual detectors information on the presence of a coating on the wire can be extracted. The use of the terms 'first time interval' and 'second time interval' does not necessarily imply that the second always must follow the first. The opposite is equally well possible. The terms 'first' and 'second' are merely used as identifiers and do not imply a ranking. Additionally the 'first time interval' needs not be equal in duration to the 'second time interval'. Preferably the duration of the second time interval 'T$_{off}$' is substantially shorter than the first time interval 'T$_{on}$' as during the 'T$_{off}$' period no detection of the presence of a coating takes place.

For example just one source can be lighted while the detectors detect the light level during T$_{on}$. The light level of the detectors together with their angular positon gives an idea of where the coating is circumferentially present. Alternatively, all light sources can be switched on at once during the first time interval T$_{on}$. As the reflection on a wire is scattered in all directions, there is no risk that one detector would be 'blinded' by the light of the sources. The sum of all detector levels can give information if there is a coating layer or not.

In an alternative preferred embodiment of the method the light sources can be switched on in sequence during equal time intervals within T$_{on}$. Intermittently, a time interval T$_{off}$ follows wherein the dark levels of all detectors are measured. This modus operandi enables to extract the circumferential distribution of the coating on the wire. The light levels of the detectors allow to reconstruct the angular distribution of the coating.

The completion of one cycle can take between 1 and 1000 milliseconds, more preferred between 10 and 100 milliseconds for example 20 milliseconds. The duration or period 'T' of one cycle is the sum of the first and second time interval: T= T$_{on}$+T$_{off}$.

Although the inventors are aware that the recording of the dark levels by all detectors individually during the second time interval wherein no source is 'on' of one measuring cell leads to a 'blind period' wherein the absence or presence of a coating by that one measuring cell is not detected as the wire is passing by, they do not consider this to be a major problem.

Firstly the measuring cell is intended to detect the presence or absence of a coating over an appreciable length i.e. the global presence of a coating is measured and a local lack of coating is not considered a large defect.

Secondly, if the detection of the presence of a coating over the complete length of the wire is required, two or more measuring cells can be put in series along the path of the wire. In case of two measuring cells as per the description above and as summarized in the claims, the methods described above are further specified by:

- Providing a wire comprising a coating that upon impingement with light responds with emission or absorption of light;
- Guiding said wire through a first measuring cell at a velocity '$v$';
- Guiding said wire through a second measuring cell, separated from said first measuring cell with a distance 'L' said distance being taken along the path of the wire;
- Electronically driving said sources and detectors of said first measuring cell according a first cycle and said sources and detectors of said second measuring cell according a second cycle comprising following time intervals:

    i. Lighting at least one of said sources while recording the light levels detected by all detectors individually for a first time interval of duration '$T_{on}$';
    ii. Extinguishing all of said sources while recording the dark levels detected by all detectors individually for a second time interval '$T_{off}$';
    iii. Wherein said second cycle lags behind the first cycle with a time delay '$\Delta t$' of zero or higher;

wherein the following requirement is met:

$$T_{off} \leq |\Delta t - (L/v)| < T_{on}$$

According to claim 7 an apparatus for coating a wire is provided. The apparatus comprises a device for providing a coating in a controlled way on an axially moving wire. With 'in a controlled way' is meant that the coating amount can be increased or decreased based on a device input. The apparatus further comprises one, two or more measuring cells as described above. The apparatus also comprises a processor for extracting information from said measuring cells according any one of the methods described.

Based on the information extracted from the measuring cell or cells by the processor a feedback loop is closed towards a certain set point for the coating amount:

- If the information extracted from the measuring cell or cells indicates that the amount of coating present on the wire passing by is below the set point, the input of the coating device will be steered towards higher coating levels;
- If the information extracted from the measuring cell or cells indicates that the amount of coating present on the wire passing by is above the set point, the input of the coating device will be steered towards lower coating levels;
The skilled person, having knowledge of the present disclosure, will understand that certain time constants have to be met in order to prevent oscillation of the feedback loop. Therefore the processor will be programmed to for example provide a moving average of the measured output from the measuring cell and steer the device input towards the set point with a time constant taking into account the speed of the wire and the time needed to detect the coating and steer the coating amount.

**Brief Description of Figures in the Drawings**

FIGURE 1 describes a measuring cell outside the scope of the present claimed invention in its most general form;
FIGURE 2 describes a non claimed particular orientation of the sources and detectors
FIGURE 3 describes another non claimed orientation of the sources and detectors;
FIGURE 4 shows another non claimed orientation of the sources and detectors;
FIGURE 5 shows a further non claimed orientation of the sources and detectors;
FIGURE 6 shows an apparatus for coating a wire;
FIGURE 7 shows an orientation of the sources and detectors according to the claimed invention;
FIGURE 8 shows a steel cord of which the coating is provided with a fluorescent;
FIGURE 9: shows different timing sequences for steering the three sources of a measuring cell;

In the figures corresponding items in different figures are identified with a number with equal units and tens while the hundred digit refers to the number of the figure. As indicated above some of the figures show examples which are not encompassed in the scope of the invention, even if they are named "embodiments" in the corresponding parts of the description. The scope of protection is solely defined by the claims.

**Mode(s) for Carrying Out the Invention**

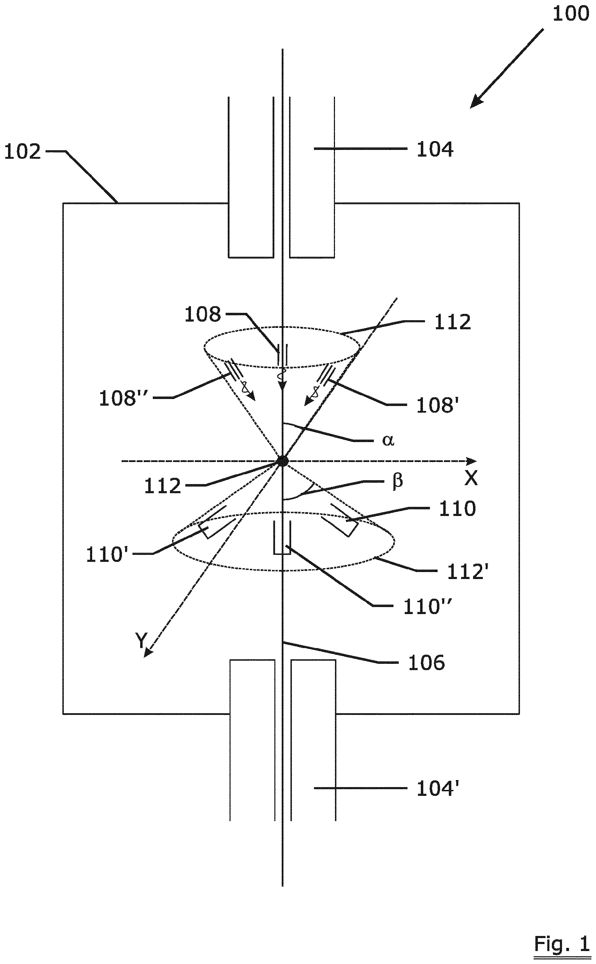

In FIGURE 1 a measuring cell 100 is depicted in its most general form.

The measuring cell comprises a cavity 102 with an entrance orifice 104 and an exit orifice 104'. The entrance and exit orifices 104, 104' defined a reference axis 106. The cavity 102 is for shielding external light from disturbing the measurement and is therefore completely impermeable to light. The orifices serve to guide the wire through the cavity. Entrance of light at the orifice is prevented by using a long entrance hole and/or coating the interior of the orifice with a light absorbing substance. In this embodiment three light sources 108, 108' and 108" are arranged on the surface of a first cone 112 that has the reference axis 106 as axis. The first cone has a top angle of $2\alpha$.

Three detectors 110, 110' and 110" are situated on the surface of second cone 112' sharing the same axis and reference axis 106 with the first cone 112. The second cone 112' has top angle of $2\beta$ differing from the top angle $2\alpha$. All detectors and sources are oriented to a central point 112 where both first 112 and second 112' cone meet. When seen along the reference axis 106 the sources are situated at angles 0° (108'), 120° (108) and 240°(108") wherein the 0° correspond to the direction of the X-axis. The detectors are situated at angles 60°(110), 180°(110') and 300°(110"). Light that is emitted by source 108' is mostly detected by detectors 110 and 110" as the other detector is obstructed by the presence of the wire along the reference axis 106. This arrangement is particularly interesting when the coating of the wire respond to the incident light by a diffuse response for example in the case of a fluorescent coating.

The sources are preferably light emitting diodes (LED's) that can either emit wideband or preferentially small band. They can be switched fast and easy by an electronic current drive. When for detecting a fluorescent in the coating the emission band of the LED's should have a shorter wavelength than the excitation threshold wavelength of the fluorescent. Therefore UV LEDs emitting below 400 nm or even below 385 nm are most preferred as the photons emitted have enough energy to excite most fluorescents. The detectors can be photodiodes, phototransistors or photo multiplier tubes. The choice is determined by the amount of light to be collected and the energy of the photons collected that on its turn depends on the diameter of the wire to be measured and the emission spectrum. For fine wires a photo multiplier tube is most preferred. In order to eliminate common wavelengths between source and emitted wavelength by the coating, it is advised to use an optical high-pass filter or band-pass filter in front of the detector blocking the emission band of the sources, but passing the emission band of the fluorescent.

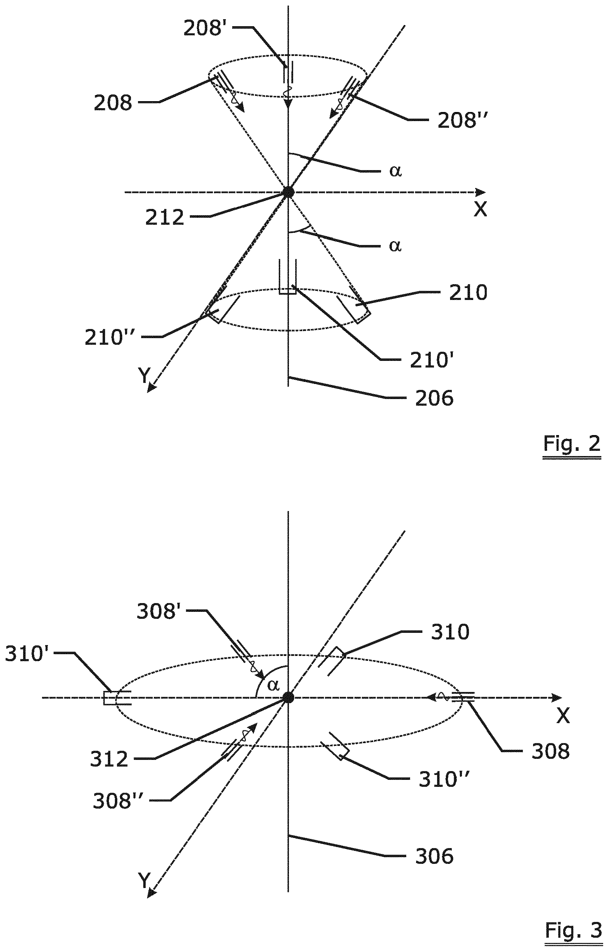

FIGURE 2 shows a second orientation of three sources and three detectors. The top angles of both the first and second cone are now set equal to the same angel $2\alpha$. Now the sources and detectors are aligned to one another: source 208" at 0° combines with detector 210 also at 0°. Likewise source 208' at 120° combines with detector 210' also at 120° and source 208 at 108° combines with detector 210" at 180°. Such an arrangement is particularly interesting when the response to the impinging light is specular for example when the coating absorbs certain light wavelengths.

In a further preferred embodiment all detectors and sources can be situated in a first and second cone that both have a top angle of 180° i.e. both the first and second cone form a plane that is perpendicular to the reference axis. An example of this arrangement is shown in FIGURE 3. As both cones must share the central point 312 it follows that first and second cone coincide and form a single plane perpendicular to the reference axis 306. Again the three sources 308, 308' and 308" are situated at angles 0°, 120° and 240°. Of course the detectors 310, 310' and 310"cannot be situated at the same angles: they are situated at angles 60°, 180° and 300° respectively.

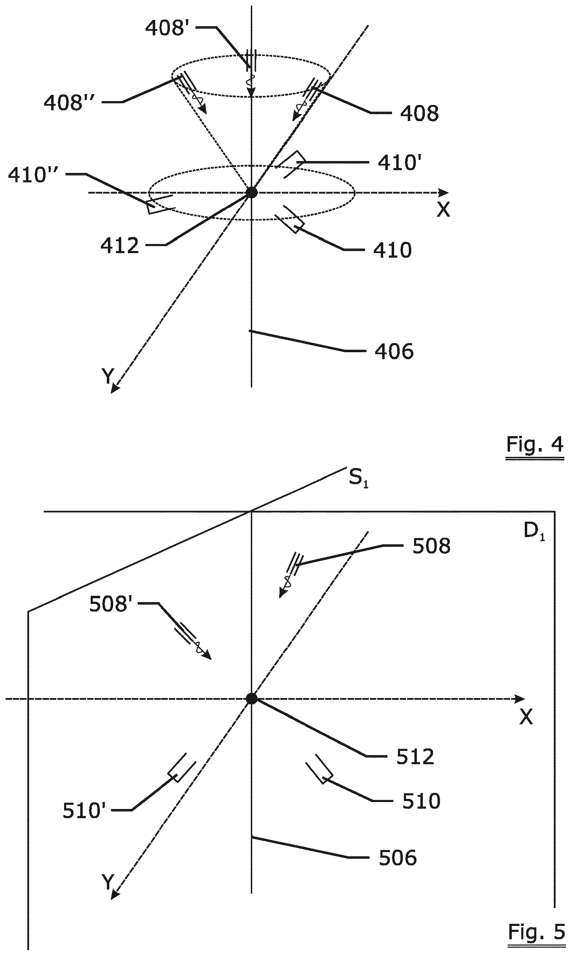

Another preferred possibility for mounting detectors and sources is put the sources on a first cone with a top angle $2\alpha$ and the detectors in a cone with top angle 180° i.e. to put the detectors in a plane perpendicular to the reference axis as depicted in FIGURE 4.

FIGURE 5 depicts a particularly preferred embodiment wherein the sources 508 and 508' are paired and situated in one plane $S_1$ comprising the reference axis 506 while the detectors 510, 510' are also paired and situated in a second plane $D_1$ comprising the axis. In this embodiment the source plane $S_1$ (corresponding to the plane formed by the reference axis and the Y-axis) is perpendicular to the detector plane $D_1$ (spanned by the reference axis and the X-axis).

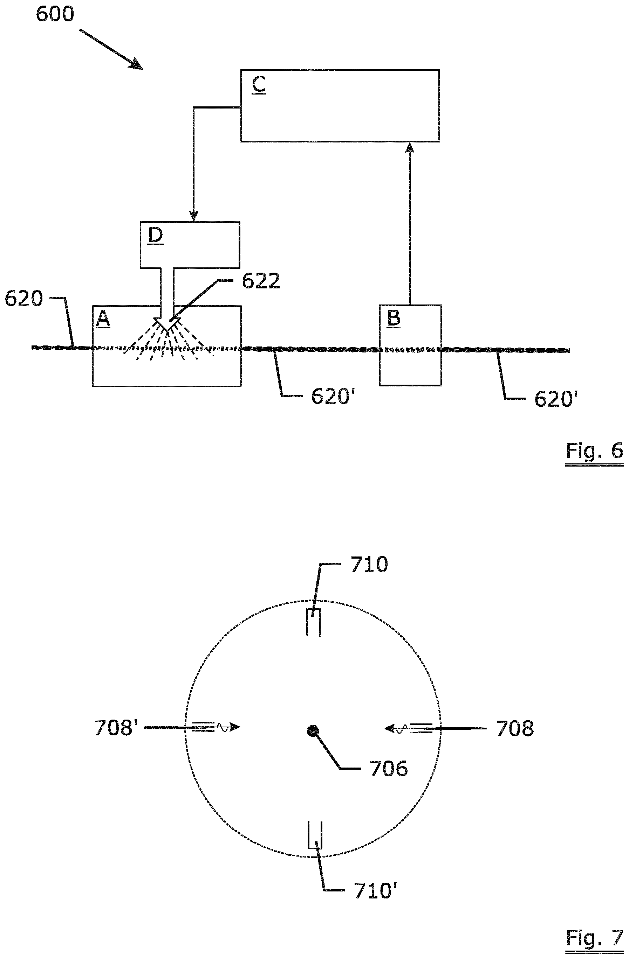

A further highly preferred embodiment that closely follows the embodiments of FIGURE 3 and FIGURE 5 is depicted in FIGURE 7. In this embodiment two sources 708, 708' and two detectors 710, 710' are all situated in one plane perpendicular to the reference axis 706. The sources are situated at 0° and 180° angles while the detectors are situated at angles 90° and 270°. The embodiment is in this way preferred in that it allows to detect the presence of the coating in the four quadrants (0°-90°, 90°-180°, 180°-270°, 270°-0°) around the wire. The inventors find this the arrangement wherein with the least amount of detectors and sources most information can be extracted.

When using the measuring cell a wire that may or may not be covered with a coating along its length is guided through the measuring cell from the entrance orifice to the exit orifice. In order to be detectable the coating must respond to impinging light by either emitting or absorbing light. If this is not the case the measuring cell will respond as if no coating is present on the wire. The signal of the detectors is constantly and individually measured, but the sources are driven according a particular cycle. The common theme for all cycles is that in every cycle there is a first time interval wherein at least one source is on '$T_{on}$' and a second time interval when all sources are off '$T_{off}$'. During that time interval the dark levels of the detectors are recorded.

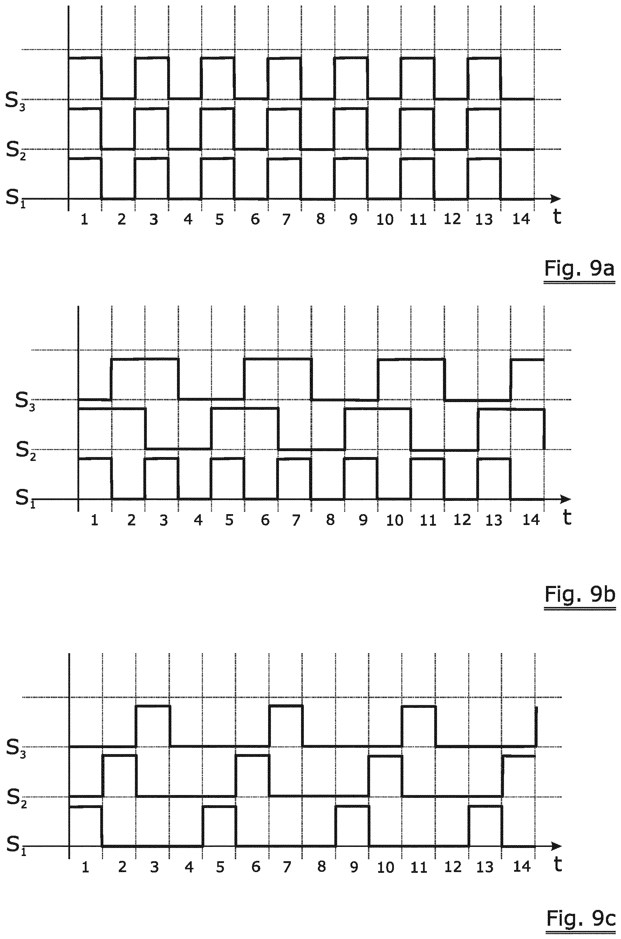

By using different schemes for the lighting of the sources, different information can be extracted from the detectors. For the embodiment of FIGURE 3 different switching schemes are suggested in FIGURES 9a, 9b, and 9c. There the lighting of the sources are indicated over time with in X-axis the numbered clock periods. When the level is high the respective source is set to 'on', when it is low the source is 'off'.

In the first scheme FIGURE 9a, all three sources are lit at once in the odd numbered clock periods (the 'first time interval') while in the even clock numbers (the 'second time interval') all sources are off. This clocking allows detecting the presence of minute coating amounts as all three detectors will collect all possible light emitted. However, it does not allow determining the circumferential distribution of the coating.

In the second clocking scheme of FIGURE 9b during the first three clock cycles (the 'first time interval') two of the sources are on ($S_1S_2$, $S_2S_3$, $S_3S_1$ , 'Off'). During the fourth clock cycle (the 'second time interval') all sources are in the 'off' state and the dark levels of the detectors are recorded. When for example $S_1$ and $S_2$ are

'on' a sector of 300° is illuminated of which 60° is illuminated by twice the intensity. The detector in between both sources $S_1$ and $S_2$ that are 'on' will detect the most light over a sector of 180° (of which 60° is doubly illuminated). The other detectors will only detect the light coming from a 120° sector. Although the radial distribution can be extracted from such signals, the processing of the signals is more cumbersome. The advantage is that more signal can be collected as the wire is better lit.

In the third clocking scheme of FIGURE 9c the sources are alternately lit in the first three clock periods (the 'first time interval') while all sources are 'off' in the fourth clock period (the 'second time interval'). As now only a sector of 180° is illuminated by for example $S_1$ the two detectors adjacent to the source each detect the light emitted over a 120° sector that overlaps with 60°. The third detector is 'in the shadow' of the source. This allows for an easier reconstruction of the circumferential distribution of the coating.

FIGURE 6 shows how the measuring cell can be advantageously used in an apparatus for coating a wire 600. The apparatus comprises a device 'A' for providing a coating in a controlled way. This can for example be a spray nozzle 622 of which the amount of coating applied is based on a device input 'D'. The uncoated wire 620 enters the device 'A' where it receives a coating and exits the device as coated wire 620'. After coating the amount of coating is measured in the measuring cell 'B'. The signals of the cell B are analysed in processor 'C' where the coating information from the measuring cell 'B' is extracted. The output of processor 'C' steers the amount of coating applied by the device input 'D'. In this way a closed loop system is formed that steers the coating amount to a set value adjustable in the processor 'C'.

If a complete detection of the coating over the length of the wire is required, two (or more) measuring cells are put in series one after the other with a distance along the wire of 'L' in between. The output of the first and second cells are combined in processor 'C'. The two measuring cells are driven by the same measuring cycle of which the second measuring cell - the cell downstream of the first second measuring cell - has a delay of '$\Delta t$' with respect to the cycle of the first measuring cell. If the wire moves at a velocity '$v$' through the apparatus, all length of the wire will be verified for the presence of a coating if:

$$T_{off} \leq |\Delta t - (L/v)| < T_{on}$$

is met.

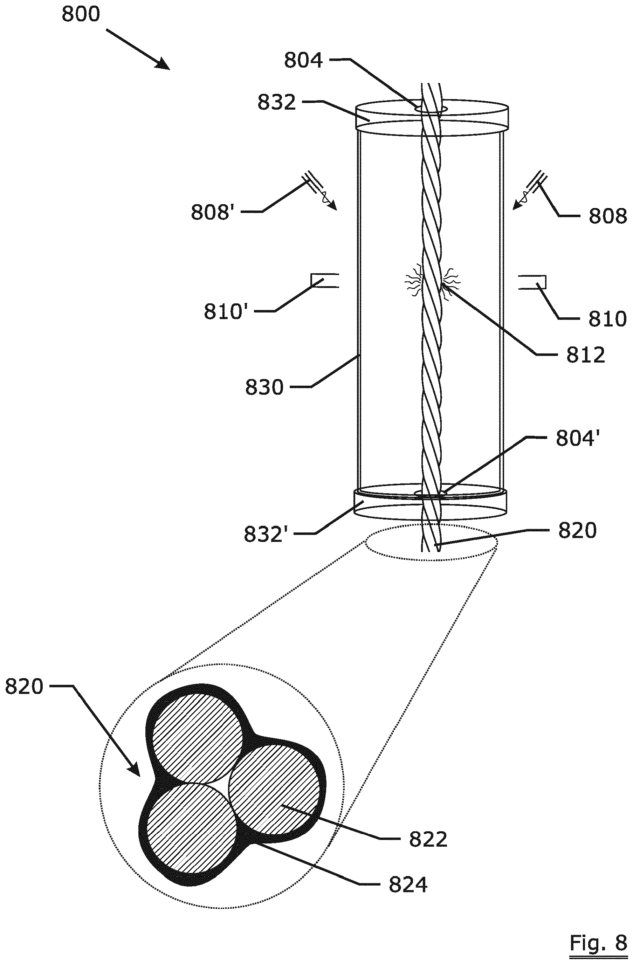

FIGURE 8 shows the measuring cell 800 that is further provided with a light transparent tube 830. At the centre of the transparent tube 830 a steel cord 820 is guided from the entrance orifice 804 to the exit orifice 804'. Sources 808 and 808' are mounted outside of the transparent tube 830 and irradiate the steel cord at central point 812. Detectors 810 and 810' are mounted in a plane perpendicular to the steel cord. The central point 812 is illuminated with two sources 808 and 808' that all lay in the same plane. The lens shows the cross section of the steel cord 820. It consists of three steel filaments 822 twisted together. The steel cord is coated with a lubricant 824. The lubricant contains 4,4'-diamino-2,2'-stilbenedisolfonic acid which is a fluorescent in a concentration of 0.5% by weight of the total coating.

An alternative use of the apparatus and method is to determine whether a adhesive coating is present on the wire. For example adhesive coatings based on organofunctional silanes, organofunctional zirconates or organofunctional titanates can be applied on a steel cord as explained in EP 2 366 047. However, the presence of the very thin adhesive coating can only be ascertained by means of an adhesion test which is time consuming and expensive. In order to avoid this adhesion test a small amount 0.1 % by weight of fluorescent 2,5-thiophenediylbis(5-tert-butyl-1,3-benzoxazole) is added to the adhesive coating. The presence and amount of adhesive can then be verified through irradiation with UV light of 385 nm that results in a fluorescent emission band between 400 to 475 nm.

cumbersome. The advantage is that more signal can be collected as the wire is better lit.

In the third clocking scheme of FIGURE 9c the sources are alternately lit in the first three clock periods (the 'first time interval') while all sources are 'off' in the fourth clock period (the 'second time interval'). As now only a sector of 180° is illuminated by for example $S_1$ the two detectors adjacent to the source each detect the light emitted over a 120° sector that overlaps with 60°. The third detector is 'in the shadow' of the source. This allows for an easier reconstruction of the circumferential distribution of the coating.

FIGURE 6 shows how the measuring cell can be advantageously used in an apparatus for coating a wire 600. The apparatus comprises a device 'A' for providing a coating in a controlled way. This can for example be a spray nozzle 622 of which the amount of coating applied is based on a device input 'D'. The uncoated wire 620 enters the device 'A' where it receives a coating and exits the device as coated wire 620'. After coating the amount of coating is measured in the measuring cell 'B'. The signals of the cell B are analysed in processor 'C' where the coating information from the measuring cell 'B' is extracted. The output of processor 'C' steers the amount of coating applied by the device input 'D'. In this way a closed loop system is formed that steers the coating amount to a set value adjustable in the processor 'C'.

If a complete detection of the coating over the length of the wire is required, two (or more) measuring cells are put in series one after the other with a distance along the wire of 'L' in between. The output of the first and second cells are combined in processor 'C'. The two measuring cells are driven by the same measuring cycle of which the second measuring cell - the cell downstream of the first second measuring cell - has a delay of '$\Delta t$' with respect to the cycle of the first measuring cell. If the wire moves at a velocity 'v' through the apparatus, all length of the wire will be verified for the presence of a coating if:

$$T_{off} \leq |\Delta t - (L/v)| < T_{on}$$

is met.

FIGURE 8 shows the measuring cell 800 that is further provided with a light transparent tube 830. At the centre of the transparent tube 830 a steel cord 820 is guided from the entrance orifice 804 to the exit orifice 804'. Sources 808 and 808' are mounted outside of the transparent tube 830 and irradiate the steel cord at central point 812. Detectors 810 and 810' are mounted in a plane perpendicular to the steel cord. The central point 812 is illuminated with two sources 808 and 808' that all lay in the same plane. The lens shows the cross section of the steel cord 820. It consists of three steel filaments 822 twisted together. The steel cord is coated with a lubricant 824. The lubricant contains 4,4'-diamino-2,2'-stilbenedisolfonic acid which is a fluorescent in a concentration of 0.5% by weight of the total coating.

An alternative use of the apparatus and method is to determine whether a adhesive coating is present on the wire. For example adhesive coatings based on organofunctional silanes, organofunctional zirconates or organofunctional titanates can be applied on a steel cord as explained in EP 2 366 047. However, the presence of the very thin adhesive coating can only be ascertained by means of an adhesion test which is time consuming and expensive. In order to avoid this adhesion test a small amount 0.1 % by weight of fluorescent 2,5-thiophenediylbis(5-tert-butyl-1,3-benzoxazole) is added to the adhesive coating. The presence and amount of adhesive can then be verified through irradiation with UV light of 385 nm that results in a fluorescent emission band between 400 to 475 nm.

**Claims**

1.  A measuring cell (100) for optically verifying the presence of a coating on a wire comprising

    - a cavity (102) having an entrance orifice (104) and exit orifice (104') for guiding said wire through said cavity, said entrance orifice and exit orifice defining a reference axis (106, 706);
    - two or more sources (708, 708');
    - two or more detectors (710, 710');
    said sources for emitting light towards a central point (112) on said reference axis (106, 706) said detectors (710, 710') for detecting light, wherein the number of sources and the number of detectors is even, said sources are placed in pair (708, 708'), pairwise opposite to said reference axis (106, 706) in source planes ($S_1$), said detectors (710, 710') are placed in pair, pairwise opposite to said reference axis (106, 706) in detector planes ($D_1$), said source planes ($S_1$) and said detector planes ($D_1$) comprising said reference axis (106, 706), wherein for each one source plane ($S_1$) there is a detector plane ($D_1$) orthogonal to said each one source plane ($S_1$), **characterized in that** said pair of detectors (710, 710') and said pair of sources (708, 708') being in a single plane perpendicular to said reference axis..

2. The measuring cell according to claim 1 wherein said source planes and said detector planes are situated equiangularly around said reference axis.

3. The measuring cell according to claim 1 or 2 wherein a light transparent tube (830) is placed between the entrance orifice (804) and exit orifice (804'), said tube comprising said reference axis.

4. The measuring cell (100) according to any one of claims 1 to 3 wherein said sources (708, 708') emit light in an excitation wavelength band, said detectors (710, 710') detecting light in a receiving wavelength band, wherein said excitation wavelength band and said receiving wavelength band are disjoint.

5. Method for optically verifying the presence of a coating on a wire using one, two or more measuring cells as claimed in claims 1-4,
said method comprising the steps of:

   - Providing a wire comprising a coating that upon impingement with light responds with emission or absorption of light;
   - Guiding said wire through said one, two or more measuring cells;
   - Electronically driving said sources and detectors of said one, two or more measuring cells in a cycle comprising following time intervals:

      i. Lighting at least one of said sources while recording the light levels detected by all detectors individually for a first time interval;
      ii. Extinguishing all of said sources while recording the dark levels detected by all detectors individually for a second time interval;

   - Extracting information on the presence of a coating by processing the recorded light levels and dark levels of all light detectors.

6. The method according claim 5 wherein said cycle driving said one, two or more measuring cells comprises the following time intervals:

   - Lighting said sources one-by-one in sequence over equal time intervals while recording the light levels detected by all detectors individually per respective time interval;
   - Extinguishing all of said light sources while recording the dark levels detected by all light detectors individually in the last time interval.

7. The method according to claim 5 or 6 wherein two measuring cells are used comprising the steps of:

   - Providing a wire comprising a coating that upon impingement with light responds with emission or absorption of light;
   - Guiding said wire through a first measuring cell at a velocity '$v$';
   - Guiding said wire through a second measuring cell, separated from said first measuring cell with a distance '$L$' said distance being taken along the path of the wire;
   - Electronically driving said sources and detectors of said first measuring cell according a first cycle and said sources and detectors of said second measuring cell according a second cycle comprising following time intervals:

      i. Lighting at least one of said sources while recording the light levels detected by all detectors individually for a first time interval of duration '$T_{on}$';
      ii. Extinguishing all of said sources while recording the dark levels detected by all detectors individually for a second time interval '$T_{off}$';
      iii. Wherein said second cycle lags behind the first cycle with a time delay '$\Delta t$' of zero or higher;

   wherein the following requirement is met:

   $$T_{off} \leq |\Delta t - (L/v)| < T_{on}$$

8. An apparatus for coating a wire said apparatus comprising:

   - a device for providing a coating in a controlled way based on a device input on an axially moving wire;
   - one, two or more measuring cells as claimed in claims 1-4,
   - a processor for extracting information from said measuring cells according to any one of the methods of claims 5 to 7;

   wherein said processor controls through said device input the amount of coating applied by said device on said axially moving wire based on the information extracted from said measuring cell.

**Patentansprüche**

1. Messzelle (100) zum optischen Verifizieren des Vorhandenseins einer Beschichtung auf einem Draht, Folgendes umfassend

 - einen Hohlraum (102) mit einer Eintrittsöffnung (104) und einer Austrittsöffnung (104') zum Führen des Drahts durch den Hohlraum, wobei die Eintrittsöffnung und die Austrittsöffnung eine Referenzachse (106, 706) definieren;
 - mindestens zwei Quellen (708, 708');
 - mindestens zwei Detektoren (710, 710');
 wobei die Quellen zum Emittieren von Licht auf einen zentralen Punkt (112) auf der Referenzachse (106, 706) und die Detektoren (710, 710') zum Detektieren von Licht dienen, wobei die Anzahl Quellen und die Anzahl Detektoren gerade sind, die Quellen als Paar (708, 708') paarweise der Referenzachse (106, 706) gegenüber in Quellebenen ($S_1$) angeordnet sind, die Detektoren (710, 710') als Paar paarweise der Referenzachse (106, 706) gegenüber in Detektorebenen ($D_1$) angeordnet sind, wobei die Quellebenen ($S_1$) und die Detektorebenen ($D_1$) die Referenzachse (106, 706) umfassen, wobei es für jede einzelne Quellebene ($S_1$) eine Detektorebene ($D_1$) orthogonal zu der jeweiligen einzelnen Quellebene ($S_1$) gibt, **dadurch gekennzeichnet, dass** das Paar Detektoren (710, 710') und das Paar Quellen (708, 708') in einer einzelnen Ebene senkrecht zu der Referenzachse sind.

2. Messzelle nach Anspruch 1, wobei die Quellebenen und die Detektorebenen gleichwinklig um die Referenzachse herum liegen.

3. Messzelle nach Anspruch 1 oder 2, wobei ein lichtdurchlässiges Rohr (830) zwischen der Eintrittsöffnung (804) und der Austrittsöffnung (804') angeordnet ist, wobei das Rohr die Referenzachse umfasst.

4. Messzelle (100) nach einem der Ansprüche 1 bis 3, wobei die Quellen (708, 708') Licht in einem Erregungswellenlängenband emittieren, die Detektoren (710, 710') Licht in einem Empfangswellenlängenband detektieren, wobei das Erregungswellenlängenband und das Empfangswellenlängenband getrennt sind.

5. Verfahren zum optischen Verifizieren des Vorhandenseins einer Beschichtung auf einem Draht unter Verwendung einer, zwei oder mehr Messzellen nach Anspruch 1 bis 4, das Verfahren die folgenden Schritte umfassend:

 - Bereitstellen eines Drahts, der eine Beschichtung umfasst, die beim Auftreffen von Licht mit Emission oder Absorption von Licht reagiert;
 - Führen des Drahts durch die eine, zwei oder mehr Messzellen;
 - elektronisches Ansteuern der Quellen und der Detektoren der einen, zwei oder mehr Messzellen in einem Zyklus, der folgende Zeitintervalle umfasst:

 i. Aufleuchten mindestens einer der Quellen für ein erstes Zeitintervall, während die Lichtpegel, die durch alle Detektoren detektiert werden, einzeln aufgezeichnet werden;
 ii. Löschen aller besagter Quellen für ein zweites Zeitintervall, während die Dunkelpegel, die durch alle Detektoren detektiert werden, einzeln aufgezeichnet werden;

 - Extrahieren von Informationen über das Vorhandensein einer Beschichtung durch Verarbeiten der aufgenommenen Lichtpegel und Dunkelpegel von allen Lichtdetektoren.

6. Verfahren nach Anspruch 5, wobei der Zyklus, der die eine, zwei oder mehr Messzellen ansteuert, die folgenden Zeitintervalle umfasst:

 - Aufleuchten der Quellen der Reihe nach eine nach der anderen über gleiche Zeitintervalle, während die Lichtpegel, die durch alle Detektoren detektiert werden, einzeln pro jeweiliges Zeitintervall aufgezeichnet werden;
 - Löschen aller besagten Lichtquellen in dem letzten Zeitintervall, während die Dunkelpegel, die durch alle Lichtdetektoren detektiert werden, einzeln aufgezeichnet werden;

7. Verfahren nach Anspruch 5 oder 6, wobei zwei Messzellen verwendet werden, die folgenden Schritte umfassend:

 - Bereitstellen eines Drahts, der eine Beschichtung umfasst, die beim Auftreffen von Licht mit Emission oder Absorption von Licht reagiert;
 - Führen des Drahts durch eine erste Messzelle mit einer Geschwindigkeit 'v';
 - Führen des Drahts durch eine zweite Messzelle, die von der ersten Messzelle mit einem Abstand 'L' getrennt ist, wobei der Abstand entlang des Drahtwegs genommen ist;
 - elektronisches Ansteuern der Quellen und Detektoren der ersten Messzelle gemäß einem ersten Zyklus und der Quellen und Detektoren der zweiten Messzelle gemäß einem zweiten Zyklus, der folgende Zeitintervalle umfasst:

 i. Aufleuchten mindestens einer der Quellen für ein erstes Zeitintervall der Dauer '$T_{on}$',

während die Lichtpegel, die durch alle Detektoren detektiert werden, einzeln aufgezeichnet werden;

ii. Löschen aller besagter Quellen für ein zweites Zeitintervall 'T$_{off}$', während die Dunkelpegel, die durch alle Detektoren detektiert werden, einzeln aufgezeichnet werden;

iii. wobei der zweite Zyklus dem ersten Zyklus mit einer Zeitverzögerung 'Δt' von null oder mehr nacheilt;

wobei die folgende Anforderung erfüllt ist:

$$T_{off} \leq |\Delta t - (L/v)| < T_{on}$$

8. Vorrichtung zum Beschichten eines Drahts, die Vorrichtung Folgendes umfassend:

- eine Vorrichtung zum Bereitstellen einer Beschichtung auf einem sich axial bewegenden Draht in einer geregelten Weise auf der Grundlage einer Eingabe an die Vorrichtung;
- eine, zwei oder mehr Messzellen nach Anspruch 1 bis 4,
- einen Prozessor zum Extrahieren von Informationen aus den Messzellen gemäß einem der Verfahren nach den Ansprüchen 5 bis 7;

wobei der Prozessor durch die Eingabe an die Vorrichtung die Beschichtungsmenge, die durch die Vorrichtung auf den sich axial bewegenden Draht aufgebracht wird, auf der Grundlage der Informationen regelt, die aus der Messzelle extrahiert wurden.

**Revendications**

1. Cellule de mesure (100) permettant de vérifier optiquement la présence d'un revêtement sur un fil, comprenant :

- une cavité (102) ayant un orifice d'entrée (104) et un orifice de sortie (104') pour guider ledit fil à travers ladite cavité, lesdits orifice d'entrée et orifice de sortie définissant un axe de référence (106, 706) ;
- deux ou plus de deux sources (708, 708') ;
- deux ou plus de deux détecteurs (710, 710') ;
lesdites sources pour émettre de la lumière vers un point central (112) sur ledit axe de référence (106, 706) lesdits détecteurs (710, 710') pour détecter la lumière, le nombre de sources et le nombre de détecteurs étant pairs, lesdites sources étant placées par paire (708, 708'), opposées par paire audit axe de référence (106, 706) dans des plans de source (S$_1$), lesdits détecteurs (710, 710') étant placés par paire, opposés par paire audit axe de référence (106, 706) dans des plans détecteurs (D$_1$), lesdits plans sources (S$_1$) et lesdits plans détecteurs (D$_1$) comprenant ledit axe de référence (106, 706), pour chaque plan source (S$_1$) un plan détecteur (D$_1$) existant orthogonal audit plan source (S$_1$), **caractérisé en ce que** ladite paire de détecteurs (710, 710') et ladite paire de sources (708, 708') se trouvent dans un seul plan perpendiculaire audit axe de référence.

2. Cellule de mesure selon la revendication 1, lesdits plans de sources et lesdits plans de détecteurs étant situés de façon équiangulaire autour dudit axe de référence.

3. Cellule de mesure selon la revendication 1 ou 2, un tube transparent à la lumière (830) étant placé entre l'orifice d'entrée (804) et l'orifice de sortie (804'), ledit tube comprenant ledit axe de référence.

4. Cellule de mesure (100) selon l'une quelconque des revendications 1 à 3, lesdites sources (708, 708') émettant de la lumière dans une bande de longueur d'onde d'excitation, lesdits détecteurs (710, 710') détectant de la lumière dans une bande de longueur d'onde de réception, ladite bande de longueur d'onde d'excitation et ladite bande de longueur d'onde de réception étant disjointes.

5. Procédé de vérification optique de la présence d'un revêtement sur un fil utilisant une, deux ou plus de deux cellules de mesure selon les revendications 1 à 4,

ledit procédé comprenant les étapes suivantes :

- fourniture d'un fil comprenant un revêtement qui, lors de l'impact avec la lumière, réagit par l'émission ou l'absorption de lumière ;
- guidage dudit fil à travers une, deux ou plus de deux cellules de mesure ;
- pilotage électroniquement desdites sources et desdits détecteurs d'une, de deux ou de plus de cellules de mesure dans un cycle comprenant les intervalles de temps suivants :

i. allumage d'au moins une desdites sources tout en enregistrant les niveaux de lumière détectés par tous les détecteurs individuellement pendant un premier intervalle de temps ;

ii. extinction de toutes lesdites sources tout en enregistrant les niveaux d'obscurité détectés par tous les détecteurs individuellement pendant un deuxième intervalle de temps ;

- extraction d'informations sur la présence d'un revêtement en traitant les niveaux de lumière et les niveaux d'obscurité enregistrés par tous les détecteurs de lumière.

6. Procédé selon la revendication 5, ledit cycle entraînant lesdites une, deux ou plus de deux cellules de mesure comprenant les intervalles de temps suivants :

- allumage desdites sources une par une en séquence sur des intervalles de temps égaux tout en enregistrant les niveaux de lumière détectés par tous les détecteurs individuellement par intervalle de temps respectif ;
- extinction de toutes lesdites sources lumineuses tout en enregistrant les niveaux d'obscurité détectés par tous les détecteurs de lumière individuellement au cours du dernier intervalle de temps.

7. Procédé selon la revendication 5 ou 6, deux cellules de mesure étant utilisées, comprenant les étapes de :

- fourniture d'un fil comprenant un revêtement qui, lors de l'impact avec la lumière, réagit par l'émission ou l'absorption de lumière ;
- guidage dudit fil à travers une première cellule de mesure à une vitesse 'v' ;
- guidage dudit fil à travers une deuxième cellule de mesure, séparée de ladite première cellule de mesure par une distance 'L', ladite distance étant prise le long de la trajectoire du fil ;
- pilotage électroniquement desdites sources et desdits détecteurs de ladite première cellule de mesure selon un premier cycle, et desdites sources et desdits détecteurs de ladite seconde cellule de mesure selon un second cycle comprenant les intervalles de temps suivants :

i. allumage d'au moins une desdites sources tout en enregistrant les niveaux de lumière détectés par tous les détecteurs individuellement pendant un premier intervalle de temps de durée '$T_{on}$' ;
ii. extinction de toutes lesdites sources tout en enregistrant les niveaux d'obscurité détectés par tous les détecteurs individuellement pendant un deuxième intervalle de temps '$T_{off}$' ;
iii. ledit deuxième cycle étant en retard sur le premier cycle avec un délai 'Δt' égal ou supérieur à zéro ;

la condition suivante étant remplie :

$$T_{off} \leq |\Delta t - (L/v)| < T_{on}$$

8. Appareil pour revêtir un fil, ledit appareil comprenant :

- un dispositif pour fournir un revêtement de manière commandée sur la base d'une entrée du dispositif sur un fil se déplaçant axialement ;
- une, deux ou plus de deux cellules de mesure selon les revendications 1 à 4,
- un processeur pour extraire des informations desdites cellules de mesure conformément à l'un quelconque des procédés selon les revendications 5 à 7 ;

ledit processeur commandant, par l'intermédiaire de l'entrée du dispositif, la quantité de revêtement appliquée par ledit dispositif sur ledit fil se déplaçant axialement, sur la base des informations extraites de ladite cellule de mesure.

Fig. 1

208'

208

208''

α

212

α

X

210

210''

210'

Y

206

Fig. 2

308'

310

310'

α

312

308

308''

310''

X

306

Y

Fig. 3

Fig. 4

Fig. 5

600

C

D

622

620

A

620'

B

620'

Fig. 6

710

708'

706

708

710'

Fig. 7

Fig. 8

Fig. 9a

Fig. 9b

Fig. 9c

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4250382 A
- US 6603126 B
- US 6597455 B
- US 5469252 A
- EP 0409932 B1
- EP 2366047 A